# EUROPEAN PATENT SPECIFICATION

(11) **EP 4 098 129 B1**
(45) Date of publication and mention of the grant of the patent: **18.10.2023**
(21) Application number: 21176867.6
(22) Date of filing: 31.05.2021
(51) Int. Cl.: A23K 20/28, A23K 20/20, A23K 40/30, A23K 40/35

(54) **ANIMAL FEED ADDITIVE COMPRISING A TRACE ELEMENT**
TIERFUTTERZUSATZ ENTHALTEND SPURENELEMENT
SUPPLÉMENT ALIMENTAIRE COMPRENANT UN OLIGOÉLÉMENT

(43) Date of publication of application: 07.12.2022
(73) Proprietor: DOX-AL ITALIA S.P.A., 20123 Milano (IT)
(72) Inventor: VENERONI, Flavio, 6612 ASCONA (CH); DAMENO, Susanna, 20064 GORGONZOLA (IT)
(74) Representative: Cattaneo, Elisabetta

(56) References cited:
- CN-A- 111 134 243
- CN-A- 111 213 790
- IT-A1- MI20 130 215

## Description

### FIELD OF THE INVENTION

The present invention relates to the preparation of an animal feed additive, commonly known in the field by the name of "dilution". Said additive contains an oligoelement with known toxicity and resulted to be able to maintain the emissions of toxic dust produced during the stresses due to the production chain, up to the animal's mouth. Said additive for animal feed also surprisingly favoured a homogeneous distribution of the oligoelement through the particle size fractions of a mineral raw material in order to obtain a standardization of the ration for the animal. Said additive also allowed an improvement of both emissions and resistance of the technological treatment.

### STATE OF THE ART

For preparing additives to be used in animal feeds, elements are used which in certain quantities resulted to be toxic, not only for operators in the sector during the preparation of the "dilution" and the formulation and administration of the final feed, but also for the environment and the territory.

It is known that some oligoelements absorbed by inhalation, individually or in combination by polyexposure, are toxic in certain amounts, in certain absorption routes, depending on the exposure time.

In particular, metals and non-metals comprised in the feed as essential oligoelements resulted to be toxic if necessarily handled during the production chain. We refer in particular to toxicity generated by manganese, zinc, cobalt and selenium, in particular as regards polyexposure.

Oligoelements are essential micronutrients that must be part of the ingredients to be added to the final feed. They must be in certain quantities, depending both on the animal species and the type of farming. They intervene in numerous metabolic reactions essential for the body. Oligoelements are added to the final feed in the form of salts (for example, zinc oxide, cobalt carbonate, sodium selenite, iron sulfate, etc.) or as additives, also commonly referred to as "dilutions" of the same feeds.

In the feed sector, "additive" (or "dilution") means a granular formulation comprising one or more oligoelements and a matrix/carrier, generally of inorganic type, to be added to an animal feed in order to provide the animal with the right dose of oligoelements for its proper nutrition.

However, during the handling of these products containing oligoelements or during the handling of the feed itself, it is known that there are emissions inhalable from both the handlers and other users along the production chain, up to the final administration of the feed to the animals, as well as emissions into the environment.

It is also known that some oligoelements absorbed by inhalation, individually or in combination by polyexposure, have toxic effects, resulting therefore dangerous for handlers in the feed sector (Zatta P. Lucchini RG, van Rensburg SJ, Taylor A. role of metals in neurodegenerative process: aluminium, manganese and zinc, Brain Res Bull, 2003, 62:15-1; "Exposition aux polluants mineraux dans les entreprises de fabrication d'aliments pour animaux - NRS ND 2213-196-04"). Document CN111213790 discloses a feed additive comprising trace elements and sepiolite as a carrier.

It is therefore felt the need to provide feeds that ensure safe dispersion, by exhalation or by contact, of toxic elements contained therein.

Safe dispersion must also be maintained during stresses encountered through the feed preparation chain: stresses due to temperatures and compressions to which feeds are subjected during manufacturing.

From a nutritional point of view, the need is also felt for a proper distribution of the oligoelement in the different particle size fractions of the matrix/carrier so that the final feed has a homogeneous distribution of such oligoelements.

It is is therefore felt the need to provide additives for animal feeds that comprise oligoelements, but are safe and allow a proper oligoelement distribution throughout the final animal feed.

### SUMMARY OF THE INVENTION

The inventors have surprisingly found a substance which, if added in the matrix mixing step, allowed to improve adhesion of oligoelements to the matrix, thus obtaining a final additive, which was very efficient both from the additive lower emissions point of view, even during stresses suffered in the supply chain, and for homogeneity of oligoelement throughout the mineral/carrier matrix with consequent homogeneous distribution throughout the mass of the final feed.

Surprisingly, thanks to the additive of the invention, it was therefore possible to have an adequate ration taken by the animal.

The object indicated above was achieved by means of a process for preparing an animal feed additive comprising the following steps:
a) providing granules of a mineral raw material;
b) mixing said granules of the mineral raw material with sepiolite granules, obtaining a granule mixture;
c) spraying the granule mixture with at least one first coating agent,
d) adding a compound selected from salts or oxides of at least one oligoelement and obtaining a granule mixture comprising at least one oligoelement; and
e) spraying the granule mixture comprising at least one oligoelement with at least one second coating agent and obtaining the feed additive,
wherein
said at least one second coating agent is different from said at least one first coating agent, and
said sepiolite comprises up to 5% by weight, with respect to its total weight, of granules having a size greater than 0.60 mm and up to 8% by weight, with respect to its total weight, of granules having a size smaller than 0.125 mm, and
wherein the percentage by weight of sepiolite granules which is mixed with the mineral raw material in step b) is in the range from 0.1 to 2% by weight, with respect to the total weight of the additive.

Without being bound to any theory, the inventors deem that sepiolite having those specific particle sizes is able to better anchor the oligoelement to the granule mixture, and consequently reduce the emission of oligoelements and allow a better distribution of the oligoelement itself throughout the mineral matrix. Therefore, the animal feed additive of the invention has a homogeneous distribution of at least one oligoelement so as to allow the right ration thereof to be given to the animal, when the additive is added and mixed with the animal feed.

Thus, in another aspect, the invention relates to an animal feed additive obtainable by the process of the invention and comprising a mineral raw material, sepiolite and at least one oligoelement, wherein said sepiolite comprises up to 5% by weight, with respect to its total weight, of granules having a size greater than 0.60 mm and up to 8% by weight, with respect to its total weight, of granules having a size smaller than 0.125 mm.

Hence, sepiolite having said particle size allows to homogeneously distribute at least one oligoelement throughout a mineral raw material.

In a further aspect, therefore, the invention concerns a use of sepiolite comprising up to 5% by weight, with respect to its total weight, of granules having a size greater than 0.60 mm and up to 8% by weight, with respect to its total weight, of granules having a size smaller than 0.125 mm to homogeneously distribute at least one oligoelement throughout an animal feed additive based on a mineral raw material, and wherein the percentage by weight of sepiolite granules which is mixed with the mineral raw material in step b) is in the range from 0.1 to 2% by weight, with respect to the total weight of the additive.

The invention will now be described in detail also with the support of the figures listed herein.

### DESCRIPTION OF THE FIGURES

Figure 1 shows the results of the additive of the invention comprising cobalt of Example 2.1.
Figure 2 shows the results of the additive of the invention comprising selenium of Example 2.2.
Figure 3 shows the results of the additive of the invention comprising iodine of Example 2.3.
Figure 4 shows the results of the additive of the invention comprising selenium of Example 2.4.
Figure 5 shows the results of the additive of the invention comprising zinc of Example 2.5.
Figure 6 shows the results of the additive of the invention comprising zinc of Example 2.6.
Figure 7 shows the results of the additive of the invention comprising manganese of Example 2.7.
Figure 8 shows the results of the additive of the invention comprising copper of Example 2.8.

### DETAILED DESCRIPTION OF THE INVENTION

The invention concerns a process for preparing an animal feed additive comprising the following steps:
a) providing granules of a mineral raw material;
b) mixing said granules of the mineral raw material with sepiolite granules, obtaining a granule mixture;
c) spraying the granule mixture with at least one first coating agent,
d) adding a compound selected from salts or oxides of at least one oligoelement and obtaining a granule mixture comprising at least one oligoelement; and
e) spraying the granule mixture comprising at least one oligoelement with at least one second coating agent and obtaining the feed additive,
wherein
said at least one second coating agent is different from said at least one first coating agent, and
said sepiolite comprises up to 5% by weight, with respect to its total weight, of granules having a size greater than 0.60 mm and up to 8% by weight, with respect to its total weight, of granules having a size smaller than 0.125 mm.

Step a) of the invention relates to the provision of granules of a mineral raw material.

The mineral raw material, also commonly referred to as carrier or matrix, is in the form of granules and may be selected from the group consisting of calcium carbonate, calcium magnesium carbonate, bentonite, clinoptilolite, calcium phosphate, sodium phosphate, magnesium phosphate, attapulgite and cristobalite. Preferably, said mineral raw material is a plurality of calcium magnesium carbonate granules. Preferably, said raw material granules have an average particle size in the range from 300 to 500 microns.

In step b) said granules of mineral raw material are mixed with sepiolite granules, obtaining a granule mixture.

According to the invention, sepiolite comprises up to 5% by weight, with respect to its total weight, of granules having a size greater than 0.60 mm and up to 8% by weight, with respect to its total weight, of granules having a size smaller than 0.125 mm.

Sepiolite is a white mineral, specifically a hydrated magnesium phyllosilicate having the formula Mg₄Si₆O₁₅(OH)₂6H₂O.

Sepiolite has the following crystallographic properties:

| | |
|---|---|
| Crystalline group: | trimetric |
| Crystal system: | orthorhombic |
| Symmetry class: | bipyramidal |
| Cell parameters: | a=5.21 b=26.73 c=13.5 |
| Point group: | 2/m 2/m 2/m |

| | |
|---|---|
| Space group: | Pnan or Pncn |

Freshly extracted sepiolite is soft, but it hardens when exposed to solar heat or when dried in a suitable environment. It has the characteristic of quickly absorbing water, and even fatty substances, without undergoing deformation. It is resistant to acids, except for hydrochloric acid.

Preferably, the sepiolite of the invention has a moisture content of up to 11% and an apparent density of about 700 g/l.

The inventors deem that they have identified sepiolite granules of certain sizes as the essential ingredient that must be present in the preparation of an additive for animal feed, and which allows oligoelements to be homogeneously distributed throughout a mineral raw material.

The percentage by weight of sepiolite granules which is mixed with the mineral raw material in step b) is in the range from 0.1 to 2% by weight, with respect to the total weight of the additive.

In step c) of the process of the invention, the granule mixture comprising at least one oligoelement is sprayed with at least one first coating agent, thus obtaining the additive of the invention.

Said at least one first coating agent of step c) may be selected from the group consisting of E420 Sorbitol, E496 Peg 6000, E484 glyceryl polyethylene glycol ricinoleate, Maltodextrin, Polyethylene glycol 300, Polyethylene glycol 400 and polyvinylpyrrolidone, and mixtures thereof. Preferably said at least one first coating agent is Polyethylene glycol 300.

In step d) according to the invention, the mass of step c) is added with a compound selected from salts or oxides of at least one oligoelement, and a granule mixture comprising at least one oligoelement is obtained.

The "oligoelement" is a chemical element (micronutrient) in an amount lower than 100 µg/g with respect to weight of the animal, to be supplied to the animal with a feed. It is contained in a salt or oxide, for example Cobalt, Selenium, Iodine, Zinc, Copper, Molybdenum, Chromium, Iron, Magnesium, Calcium, Aluminium and Silicon. The oligoelements are indicated by way of example, the invention can in fact be applied to all oligoelements allowed in animal nutrition. These oligoelements are added to the granules of step c) in the form of salts or oxides.

The percentage by weight of oligoelement present in the additive at the end of the preparation is in the range from 0.1 to 20% with respect to the weight of the final additive.

In step e) the granule mixture of mineral raw material and sepiolite granules according to the invention is sprayed with at least one second coating agent.

Said at least one second coating agent of step e) may be selected from the group consisting of E491 Sorbitan monostearate, E433 Polyoxyethylene sorbitan monooleate, E432 Polyoxyethylene sorbitan monolaurate, E434 Polyoxyethylene sorbitan monopalmitate, E435, Polyoxyethylene sorbitan monostearate, E433 Polyoxyethylene sorbitan monooleate, polyvinylpyrrolidone, and mixtures thereof. Preferably said at least one second coating agent is E432 Polyoxyethylene sorbitan monolaurate, also defined as Polysorbate 20.

In a preferred and advantageous embodiment, in step c) the at least one first coating agent is Polyethylene glycol 300 and the at least one second coating agent of step e) is E432 Polyoxyethylene sorbitan monolaurate, also defined as Polysorbate 20.

The process of the invention can provide for an optional step f) of spraying with a filming solution before obtaining the animal feed additive.

Among the filming substances/solutions, for example, paraffins or vegetable oils can be mentioned.

The preparation of the animal feed additive as a plurality of granules, in this way, guarantees that oligoelements in the form of salts/oxides are kept within the safety limits for operators in the sector and are uniformly dispersed throughout the same additive by adhesion to the mineral raw material.

In another aspect, therefore, the invention concerns an additive for animal feed obtainable by the process of the invention and comprising a mineral raw material, sepiolite and at least one oligoelement, wherein said sepiolite comprises up to 5% by weight, with respect to its total weight, of granules having a size greater than 0.60 mm and up to 8% by weight, with respect to its total weight, of granules having a size smaller than 0.125 mm.

Without being bound to any theory, the inventors deem that the surprising properties of the additive of the invention are due to the sepiolite granules of a specific size, which in this context behaves like a glidant, thus decreasing the friction force between the particles, favouring their flowing, and consequently improving the adhesiveness of the salt containing the oligoelements to the mineral matrix.

Advantageously, moreover, thanks to its compatibility, density, and particle size distribution, it prevents formation of segregations during handling. The uneven surface of sepiolite also facilitates the mixing with small particle size components such as oligoelement salts/oxides. Its positive effect on flowing and moisture control improves the quality of the additive, also allowing the addition of liquid additives without altering the fluidity of the same additive. These characteristics allow the oligoelement in the form of salt/oxide to have a homogeneous distribution among the particle size fractions of the mineral raw material.

According to the invention, therefore, the final additive will be a set of granules having a predetermined amount of one or more oligoelements salts/oxides adhered to the mineral raw material, with controlled dustiness even during compression stresses, such as for example from 0.5 to 5 tons/cm², and a temperature, such as for example from 50 to 120°C, and therefore safe for the environment and for humans, and with a homogeneous distribution of the same in order to have the right feed ration for the animal.

The percentage of oligoelement adhering to the mineral matrix is preferably in the range from 0.1 to 20% with respect to the amount of mineral raw material.

The stability index of feeds produced with the additive of the invention is excellent, excluding the risks of dispersion/exhalation of metals or non-metals during all steps of feed handling both within the production site and during distribution and use, thus withstanding the temperature and compression stresses normally present in the animal feed production chain. The ration of micronutrients that is given to the animals is certain, standardized, and there are no differences due to repartition of the "dilution" during use.

In a further aspect, therefore, the invention concerns a use of sepiolite comprising up to 5% by weight, with respect to its total weight, of granules having a size greater than 0.60 mm and up to 8% by weight, with respect to its total weight, of granules having a size smaller than 0.125 mm in order to homogeneously distribute at least one oligoelement throughout an animal feed additive based on a mineral raw material.

The invention will now be illustrated in greater detail through illustrative and limiting examples of the invention.

### Example 1: Preparation of the animal feed additive with different oligoelements

### Example 1.1. 5% Cobalt (with respect to the total of 100 mg)

The following ingredients were used for preparing a 100 g sample:

| | |
|---|---|
| Cobalt carbonate (cobalt oligoelement salt) | 10.0 g |
| Polisorbate 20 | 0.3 g |
| Polyethylene glycol 300 | 2.6 g |
| Sepiolite granules | 0.5 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

Calcium magnesium carbonate was charged into a ribbon mixer, operating the mixer. Granular sepiolite was then added. After 1 minute of mixing, and keeping the mixer running, polyethylene glycol 300 was added. The mass was then mixed, and cobalt carbonate was subsequently added. In the same mixer, Polysorbate 20 was added and mixing continued. The mass was then discharged into a bag for packaging and storage.

### Example 1.2. 5% Cobalt (with respect to the total of 100 mg)

The following ingredients were used for preparing a 100 g sample:

| | |
|---|---|
| Cobalt carbonate (cobalt oligoelement salt) | 10.0 g |
| Polisorbate 20 | 0.3 g |
| Polyethylene glycol 300 | 2.6 g |
| Sepiolite granules | 0.3 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.3. 5% Cobalt (with respect to the total of 100 mg)

The following ingredients were used for preparing a 100 g sample:

| | |
|---|---|
| Cobalt carbonate (cobalt oligoelement salt) | 10.0 g |
| Polisorbate 20 | 0.3 g |
| Polyethylene glycol 300 | 2.6 g |
| Sepiolite granules | 1.0 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.4. 1% Selenium (with respect to the total of 100 mg)

The following ingredients were used for a 100 g sample:

| | |
|---|---|
| Sodium selenite (selenium oligoelement salt) | 2.25 g |
| Polisorbate 20 | 1.2 g |
| Polyethylene glycol 300 | 11.8 g |
| Sepiolite granules | 0.5 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.5. 18% Manganese (with respect to the total of 100 mg)

The following ingredients were used for a 100 g sample:

| | |
|---|---|
| Manganese oxide (manganese oligoelement salt) | 29.5 g |
| Polisorbate 20 | 2.3 g |
| Polyethylene glycol 300 | 22.7 g |
| Sepiolite granules | 1.8 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.6. 10% Manganese (with respect to the total of 100 mg)

The following ingredients were used for a 100 g sample:

| | |
|---|---|
| Manganese oxide (manganese oligoelement salt) | 16.7 g |
| Polisorbate 20 | 1.8 g |
| Polyethylene glycol 300 | 18.2 g |
| Sepiolite granules | 1.5 g |
| Light liquid paraffin | 1.0 g |
| Calcium Magnesium carbonate (mineral raw material) | q.s. to 100 g |

Sepiolite had been screened with vibrating screens so as to have up to 5% by weight, with respect to its total weight, of granules having a size greater than 0.60 mm and up to 8% by weight, with respect to its total weight, of granules having a size smaller than 0.125 mm.

Calcium magnesium carbonate was charged into a ribbon mixer, operating the mixer. Granular sepiolite was then added. After 1 minute of mixing, and keeping the mixer running, polyethylene glycol 300 was added. Manganese oxide was then added. The mass was then mixed, and subsequently, in the same mixer, Polysorbate 20 was added and mixing continued. The mass was then discharged into a bag for packaging and storage.

### Example 1.7. 4.5% Selenium (with respect to the total of 100 mg)

The following ingredients were used for a 100 g sample:

| | |
|---|---|
| Sodium selenite (selenium oligoelement salt) | 10.0 g |
| Polisorbate 20 | 1.4 g |
| Polyethylene glycol 300 | 13.6 g |
| Sepiolite granules | 0.7 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.8. 10% Iodine (with respect to the total of 100 mg)

The following ingredients were used for a 100 g sample:

| | |
|---|---|
| Calcio iodate(calcium oligoelement salt) | 16.2 g |
| Polisorbate 20 | 1.6 g |
| Polyethylene glycol 300 | 16.4 g |
| Sepiolite granules | 1.5 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.9. 10% Zinc (with respect to the total of 100 mg)

The following ingredients were used for a 100 g sample:

| | |
|---|---|
| Zinc oxide (zinc oligoelement salt) | 14.0 g |
| Polisorbate 20 | 1.5 g |
| Polyethylene glycol 300 | 14.5 g |
| Sepiolite granules | 1.0 g |
| Light liquid paraffin | 0.6 g |
| Calcium Magnesium carbonate (mineral raw material) | q.s. to 100 g |

Sepiolite had been screened with vibrating screens so as to have up to 5% by weight, with respect to its total weight, of granules having a size greater than 0.60 mm and up to 8% by weight, with respect to its total weight, of granules having a size smaller than 0.125 mm.

Calcium magnesium carbonate was charged into a ribbon mixer, operating the mixer. Granular sepiolite was then added. After 1 minute of mixing, and keeping the mixer running, polyethylene glycol 300 was added. The mass was then mixed, and zinc oxide was subsequently added. In the same mixer, Polysorbate 20 was added and mixing continued. Light liquid paraffin was then added and mixing continued. The mass was then discharged into a bag for packaging and storage.

### Example 1.10. 15% Zinc (with respect to the total of 100 mg)

The following ingredients were used for a 100 g sample:

| | |
|---|---|
| Zinc oxide (zinc oligoelement salt) | 20.9 g |
| Polisorbate 20 | 1.5 g |
| Polyethylene glycol 300 | 14.5 g |
| Sepiolite granules | 1.5 g |
| Light liquid paraffin | 0.6 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

Calcium magnesium carbonate was charged into a ribbon mixer, operating the mixer. Granular sepiolite was then added. After 1 minute of mixing, and keeping the mixer running, polyethylene glycol 300 was added. The mass was then mixed, and, subsequently, Polysorbate 20 was added into the same mixer and mixing continued. Light liquid paraffin was then added and mixing continued. The mass was then discharged into a bag for packaging and storage.

### Example 1.11. 5% Iron (with respect to the total of 100 mg)

The following ingredients were used for a 100 g sample:

| | |
|---|---|
| Iron sulfate (iron oligoelement salt) | 16.6 g |
| Polisorbate 20 | 0.3 g |
| Polyethylene glycol 300 | 2.7 g |

| | |
|---|---|
| Sepiolite granules | 0.5 g |
| Calcium Magnesium carbonate (mineral raw material) | q.s. to 100 g |

Sepiolite had been screened with vibrating screens so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.12. 5% Molybdenum (with respect to the total of 100 mg)

The following ingredients were used for a 100 g sample:

| | |
|---|---|
| Sodium molybdate (sodium oligoelement salt) | 12.5 g |
| Polisorbate 20 | 0.4 g |
| Polyethylene glycol 300 | 2.6 g |
| Sepiolite granules | 0.7 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.13. 1% Chromium (with respect to the total of 100 mg)

The following ingredients were used for a 100 g sample:

| | |
|---|---|
| Chromium picolinate (chromium oligoelement salt) | 8.0 g |
| Polisorbate 20 | 0.3 g |
| Polyethylene glycol 300 | 2.9 g |
| Sepiolite granules | 0.7 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 1.14. 10% Copper (with respect to the total of 100 mg)

The following ingredients were used for a 100 g sample:

| | |
|---|---|
| Copper sulfate (copper oligoelement salt) | 40.0 g |
| Polisorbate 20 | 1.8 g |
| Polyethylene glycol 300 | 18.2 g |
| Sepiolite granules | 0.7 g |
| Calcium Magnesium carbonate (mineral raw material) | q.s. to 100 g |

Sepiolite had been screened with vibrating sieves so as to have up to 5% by weight, with respect to its total weight, of granules having a size greater than 0.60 mm and up to 8% by weight, with respect to its total weight, of granules having a size smaller than 0.125 mm.

The different ingredients were added and treated following the procedure of Example 1.1.

### Example 2. Evaluation of oligoelement distribution on the matrix and evaluation of "dilution" emissions

A series of determinations were carried out in order to verify the safety in terms of dispersion/exhalation of each oligoelement in the cited examples 1.1-1.14.

The following were evaluated: particle size, oligoelement titre for each particle size fraction, total dustiness on the Heubach filter. The additive of the invention was subjected to determination of dustiness of the residue collected on the filter with the Heubach apparatus. The determination of the emission index with the Heubach apparatus is a satisfactory laboratory simulation of individual exposure to hazardous substances in occupational situations, therefore demonstrating that the final additive obtained is advantageously safe for the operator in the workplace. ("The control of toxic substances" by D. Pickard). The emission on the filter must be less than 1 mg/filtrer.

The process of the invention and therefore the addition of sepiolite in step b), allowed to maintain acceptable values as regards the emissions/dispersions/exhalations of the toxic element well below what is allowed in the feed sector to keep operator's safety.

Thanks to the addition of sepiolite in the formulation at a precise stage of the manufacturing process, the invention also provides for obtaining a precise distribution of the oligoelement through the particle size fractions of the mineral raw material. This aspect is of fundamental importance in order to have the right dose of micronutrients reaching the animal's mouth.

Below are the results relating to the proper distribution of the oligoelement in the particle size fractions of the mineral raw material.

### Example 2.1. 5% Cobalt

With reference to the additive containing the oligoelement cobalt of Example 1.1, the cobalt content and the percentage distribution in the different granules of mineral raw material of the final additive itself was measured. The particle size fractions are obtained by sieving the finished product using a vibrating sieve. Each particle size fraction was then evaluated to determine the cobalt titre and then the adherent percentage thereof.

The quantitative determination of cobalt was carried out using a UV spectrophotometric method at 640 nm according to methods known in the field. Specifically, with reference to cobalt, the results reported in the following Table 1 were obtained.

**Table 1: 5% Cobalt**

| **FRACTIONS (micron)** | **WEIGHT (g)** | **weight%** | **Co (g)** | **Titre Co%** | **Co%** |
|---|---|---|---|---|---|
| > 1000 | 18.94 | **6.33** | 0.786 | 4.15% | **5.1** |
| > 850 | 27.57 | **9.21** | 1.213 | 4.40% | **7.8** |
| > 600 | 150.41 | **50.23** | 7.430 | 4.94% | **47.8** |
| > 500 | 81.37 | **27.18** | 4.427 | 5.44% | **28.5** |
| > 425 | 13.57 | **4.53** | 0.790 | 5.82% | **5.1** |
| > 355 | 2.81 | **0.94** | 0.187 | 6.64% | **1.2** |
| > 250 | 2.89 | **0.97** | 0.283 | 9.79% | **1.8** |
| > 180 | 1.86 | **0.62** | 0.199 | 10.69% | **1.3** |
| >106 | 1.86 | **0.62** | 0.219 | 11.78% | **1.4** |
| Total | 299.42 | **100.00** | 15.533 | | **100.0** |

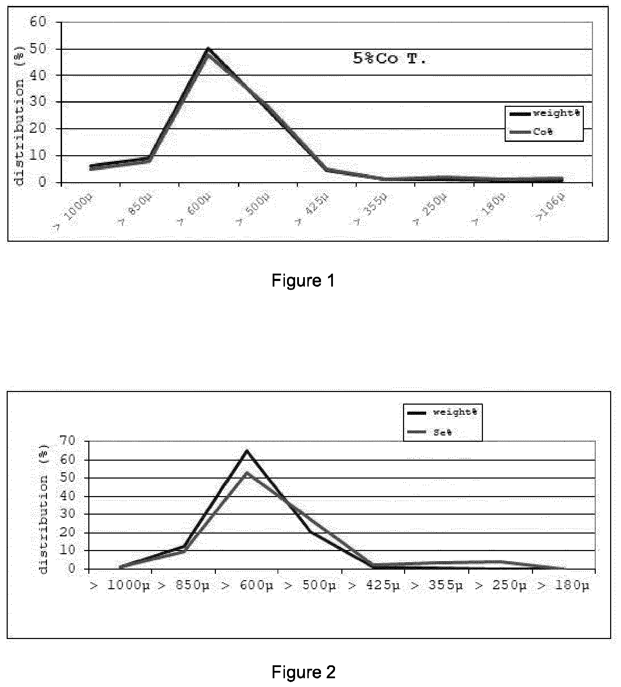

The detected Cobalt percentage was plotted against the granulometric fractions of the mineral raw material of the final additive in Figure 1. Figure 1 shows the distribution of the Cobalt percentage in the various granulometric fractions of the additive mineral raw material, split based on the different sizes in microns. It was observed that the Cobalt curve was perfectly superimposable to that of the mineral raw material, thus demonstrating a homogeneous adhesion of Cobalt to the mineral raw material present in the additive.

### Example 2.2. 1% Selenium

With reference to the additive containing the oligoelement selenium of Example 1.4, the selenium content and the percentage distribution in the different granules of mineral raw material of the final additive itself was measured as shown in Example 2.1. The particle size fractions are obtained by sieving the finished product using a vibrating sieve. Each particle size fraction was then evaluated to determine the selenium titre and then the adherent percentage thereof.

The quantitative determination of selenium was carried out with volumetric titration according to methods known in the field.

Specifically, with reference to selenium, the results reported in the following Table 2 were obtained.

**Table 2: 1% Selenium**

| **FRACTIONS (micron)** | **WEIGHT (g)** | **weight%** | **Se (g)** | **Titre Se%** | **Se%** |
|---|---|---|---|---|---|
| > 1000 | 3.35 | **1.11** | 0.023 | 0.69% | **1.1** |
| > 850 | 36.74 | **12.15** | 0.195 | 0.53% | **9.5** |
| > 600 | 197.03 | **65.15** | 1.084 | 0.55% | **53.0** |
| > 500 | 62 | **20.50** | 0.552 | 0.89% | **27.0** |
| > 425 | 2.41 | **0.80** | 0.045 | 1.88% | **2.2** |
| > 355 | 0.58 | **0.19** | 0.068 | 11.68% | **3.3** |
| > 250 | 0.3 | **0.10** | 0.080 | 26.74% | **3.9** |
| > 180 | 0.03 | **0.01** | 0.000 | | **0.0** |
| Total | 302.44 | **100.00** | 2.047 | | **100.0** |

The detected selenium percentage was plotted against the granulometric fractions of the mineral raw material of the final additive in Figure 2. Figure 2 shows the distribution of the Selenium percentage in the various granulometric fractions of the additive mineral raw material, split based on the different sizes in microns. It was observed that the Selenium curve was perfectly superimposable to that of the mineral raw material, thus demonstrating a homogeneous adhesion of Selenium to the mineral raw material present in the additive.

### Example 2.3. 10% Iodine

With reference to the additive containing the oligoelement iodine of Example 1.8, the iodine content and the percentage distribution in the different granules of mineral raw material of the final additive itself was measured as shown in Example 2.1.

The particle size fractions are obtained by sieving the finished product using a vibrating sieves. Each particle size fraction was then evaluated to determine the iodine titre and then the adherent percentage thereof.

The quantitative determination of iodine was carried out using volumetric titration according to methods known in the field.

Specifically, with reference to iodine, the results reported in Table 3 below were obtained.

**Table 3: 10% Iodine**

| **FRACTIONS (micron)** | **WEIGHT (g)** | **weight%** | **I (g)** | **Titre I%** | **I%** |
|---|---|---|---|---|---|
| > 1000 | 16.33 | **5.41** | 2.498 | 15.30% | **1.0** |
| > 850 | 25.15 | **8.33** | 6.111 | 24.30% | **2.4** |
| > 600 | 140.14 | **46.42** | 196.701 | 140.36% | **77.3** |
| > 500 | 63.95 | **21.18** | 42.143 | 65.90% | **16.6** |
| > 425 | 15.9 | **5.27** | 2.592 | 16.30% | **1.0** |
| > 355 | 16.36 | **5.42** | 2.495 | 15.25% | **1.0** |
| > 250 | 9.18 | **3.04** | 0.849 | 9.25% | **0.3** |
| > 180 | 6.35 | **2.10** | 0.381 | 6.00% | **0.1** |
| > 106 | 8.56 | **2.84** | 0.732 | 8.55% | **0.3** |
| Total | 301.92 | **100.00** | 254.502 | | **100.0** |

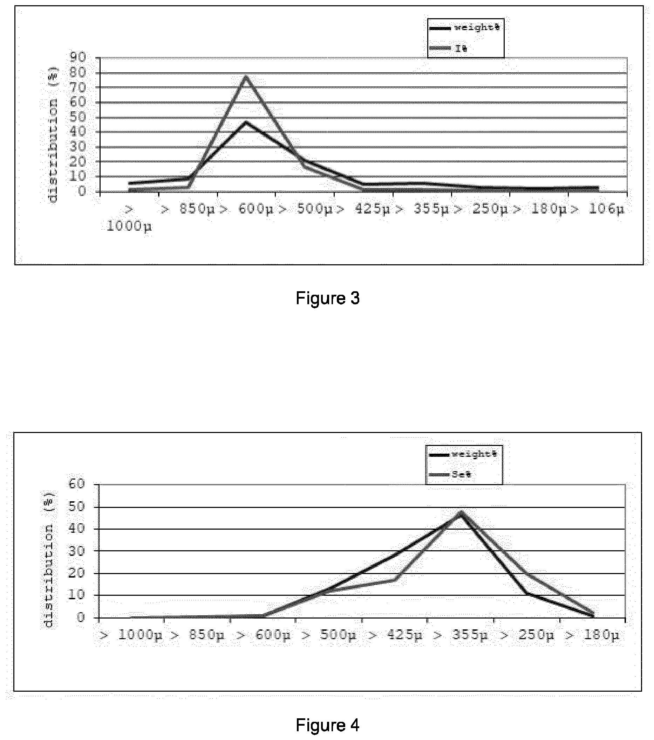

The percentage of iodine detected was plotted against the granulometric fractions of the final additive in Figure 3. Figure 3 shows the distribution of the iodine percentage in the various granulometric fractions of the additive mineral raw material, split based on the different sizes in microns. It was observed that the iodine curve was quite superimposable to that of the mineral raw material; the overlap was not perfect because the iodine concentration was very high (10%). The correlation between the 2 curves was nevertheless good.

### Example 2.4. 4.5% Selenium

With reference to the additive containing the oligoelement selenium of Example 7, the selenium content and the percentage distribution in the different granules of mineral raw material of the final additive itself was measured as shown in Example 2.1.

Specifically, with reference to selenium, the results reported in the following table 4 were obtained.

**Table 4: 4.5% Selenium**

| **FRACTIONS (micron)** | **WEIGHT (g)** | **weight%** | **Se (g)** | **Titre Se%** | **Se%** |
|---|---|---|---|---|---|
| > 1000 | 0.19 | **0.06** | 0.000 | | **0.0** |
| > 850 | 0.26 | **0.09** | 0.015 | 5.76% | **0.1** |
| > 600 | 2.37 | **0.78** | 0.104 | 4.39% | **0.9** |
| > 500 | 39.19 | **12.98** | 1.474 | 3.76% | **12.0** |
| > 425 | 84.62 | **28.03** | 2.099 | 2.48% | **17.2** |
| > 355 | 139.56 | **46.22** | 5.848 | 4.19% | **47.8** |
| > 250 | 33.7 | **11.16** | 2.437 | 7.23% | **19.9** |
| > 180 | 2.04 | **0.68** | 0.255 | 12.52% | **2.1** |
| Total | 301.93 | **100.00** | 12.231 | | **100.0** |

The detected selenium percentage was plotted against the granulometric fractions of the mineral raw material of the final additive in Figure 4. Figure 4 shows the distribution of the selenium percentage in the various granulometric fractions of the additive mineral raw material, split based on the different sizes in microns. It was observed that the selenium curve was quite superimposable to that of the mineral raw material, the overlap was not perfect because the iodine concentration was very high (10%). The correlation between the 2 curves was nevertheless good.

### Example 2.5: 10% Zinc

With reference to the additive containing the oligoelement zinc of Example 1.9, the iodine content and the percentage distribution in the different granules of mineral raw material of the final additive itself was measured as shown in Example 2.1 Specifically, with reference to zinc, the results reported in Table 5 below were obtained.

**Table 5: 10% Zinc**

| **FRACTIONS (micron)** | **WEIGHT (g)** | **weight%** | **Zn (g)** | **Titre Zn%** | **Zn%** |
|---|---|---|---|---|---|
| > 600 | 87.75 | **87.35** | 8.450 | 9.63% | **87.4** |
| > 355 | 12.71 | **12.65** | 1.218 | 9.58% | **12.6** |
| > 106 | 0 | **0.00** | 0.000 | 0.00% | **0.0** |
| flat | 0 | **0.00** | 0.000 | 0.00% | **0.0** |
| Total | 100.46 | **100.00** | 9.668 | | **100.0** |

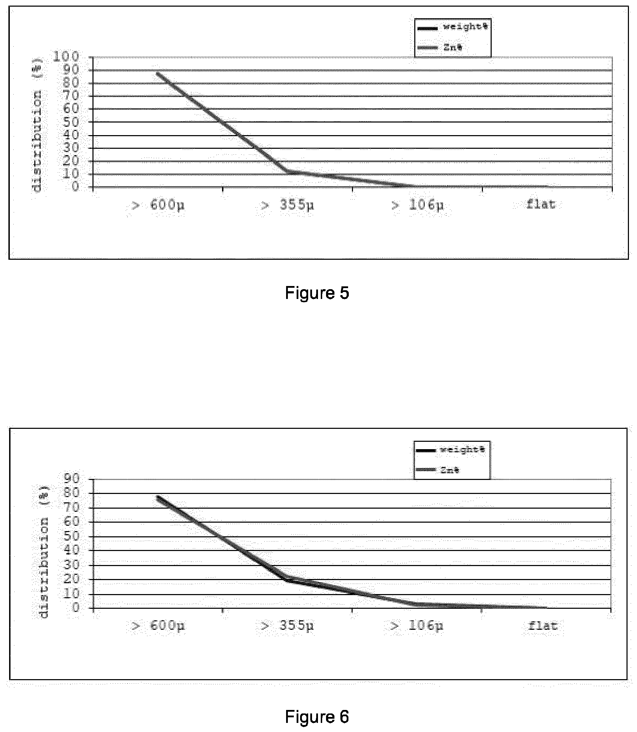

The detected zinc percentage was plotted against the granulometric fractions of the mineral raw material of the final additive in Figure 5.

The particle size fractions are obtained by sieving the finished product using a vibrating sieve. Each particle size fraction was then evaluated to determine the zinc titre and then the adherent percentage thereof.

The quantitative determination of Zinc was performed using an inductively coupled plasma atomic emission spectrometry method with an ICP-OES instrument.

Figure 5 shows the distribution of the zinc percentage in the various granulometric fractions of the additive mineral raw material, split based on the different sizes in microns. It was observed that the zinc curve was perfectly superimposable to that of the mineral raw material, thus demonstrating a homogeneous adhesion of zinc to the mineral raw material present in the additive.

### Example 2.6: 15% Zinc

With reference to the additive containing the oligoelement zinc of Example 1.10, the zinc content and the percentage distribution in the different granules of mineral raw material of the final additive itself was measured as shown in Example 2.1. Specifically, with reference to zinc, the results reported in Table 6 below were obtained.

**Table 6: 15% Zinc**

| **FRACTIONS (micron)** | **WEIGHT (g)** | **weight%** | **Zn (g)** | **Titre Zn%** | **Zn%** |
|---|---|---|---|---|---|
| > 600 | 78.05 | **77.93** | 10.326 | 13.23% | **75.3** |
| > 355 | 19.27 | **19.24** | 3.079 | 15.98% | **22.5** |
| > 106 | 2.84 | **2.84** | 0.300 | 10.57% | **2.2** |
| flat | 0 | **0.00** | 0.000 | 0.00% | **0.0** |
| Total | 100.16 | **100.00** | 13.706 | | **100.0** |

The detected zinc percentage was plotted against the granulometric fractions of the mineral raw material of the final additive in Figure 6. Figure 6 shows the distribution of the zinc percentage in the various granulometric fractions of the additive mineral raw material, split based on the different sizes in microns. It was observed that the zinc curve was perfectly superimposable to that of the mineral raw material, thus demonstrating a homogeneous adhesion of zinc to the mineral raw material present in the additive.

### Example 2.7: 10% Manganese

With reference to the additive containing the oligoelement manganese of Example 1.6, the manganese content and the percentage distribution in the different granules of mineral raw material of the final additive itself was measured as shown in Example 2.1. The particle size fractions are obtained by sieving the finished product using a vibrating sieve. Each particle size fraction was then evaluated to determine the manganese titre and then the adherent percentage thereof.

The quantitative determination of manganese was performed using an inductively coupled plasma atomic emission spectrometry method with an ICP-OES instrument.

Specifically, with reference to manganese, the results reported in Table 7 below were obtained.

**Table 7: 10% Manganese**

| **FRACTIONS (micron)** | **WEIGHT (g)** | **Weight %** | **Mn (g)** | **Titre Mn%** | **Mn%** |
|---|---|---|---|---|---|
| > 600 | 85.19 | **84.86** | 5.282 | 6.20% | **71.8** |
| > 355 | 14.35 | **14.29** | 1.646 | 11.47% | **22.4** |
| > 106 | 0.85 | **0.85** | 0.433 | 50.90% | **5.9** |
| flat | 0 | **0.00** | 0.000 | 0.00% | **0.0** |
| Total | 100.39 | **100.00** | 7.360 | | **100.0** |

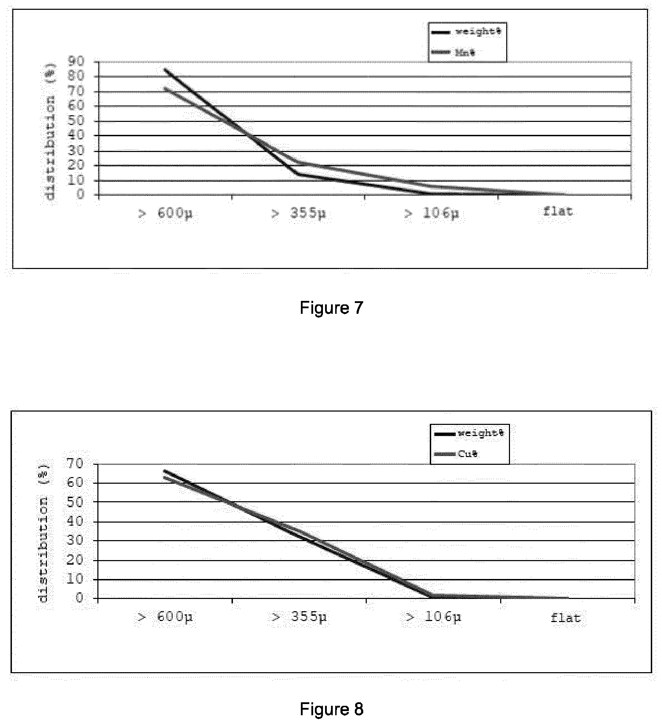

The detected manganese percentage was plotted against the granulometric fractions of the mineral raw material of the final additive in Figure 7. Figure 7 shows the distribution of the manganese percentage in the various granulometric fractions of the additive mineral raw material, split based on the different sizes in microns. It was observed that the manganese curve was perfectly superimposable to that of the mineral raw material, thus demonstrating a homogeneous adhesion of zinc to the mineral raw material present in the additive.

### Example 2.8: 10% Copper

With reference to the additive containing the oligoelement copper of Example 1.14, the copper content and the percentage distribution in the different granules of mineral raw material of the final additive itself was measured as shown in Example 2.1.

Specifically, with reference to copper, the results reported in Table 8 below were obtained.

**Table 8: 10% Copper**

| **FRACTIONS (micron)** | **WEIGHT (g)** | **Weight %** | **Cu (g)** | **Titre Cu%** | **Cu%** |
|---|---|---|---|---|---|
| > 600 | 67.69 | **66.64** | 6.092 | 9.00% | **62.8** |
| > 355 | 33.06 | **32.55** | 3.438 | 10.40% | **35.5** |
| > 106 | 0.82 | **0.81** | 0.165 | 20.16% | **1.7** |
| flat | 0 | **0.00** | 0.000 | 0.00% | **0.0** |
| Total | 101.57 | **100.00** | 9.696 | | **100.0** |

The detected copper percentage was plotted against the granulometric fractions of the mineral raw material of the final additive in Figure 8. Figure 8 shows the distribution of the copper percentage in the various granulometric fractions of the additive mineral raw material, split based on the different sizes in microns. It was observed that the copper curve was perfectly superimposable to that of the mineral raw material, thus demonstrating a homogeneous adhesion of zinc to the mineral raw material present in the additive.

## Claims

1. A process for preparing an animal feed additive comprising the following steps:
a) providing granules of a mineral raw material;
b) mixing said granules of the mineral raw material with sepiolite granules, obtaining a granule mixture;
c) spraying the granule mixture with at least one first coating agent,
d) adding a compound selected from salts or oxides of at least one oligoelement and obtaining a granule mixture comprising at least one oligoelement; and
e) spraying the granule mixture comprising at least one oligoelement with at least one second coating agent and obtaining the feed additive,
wherein
said at least one second coating agent is different from said at least one first coating agent, and
said sepiolite comprises up to 5% by weight, with respect to its total weight, of granules having a size greater than 0.60 mm and up to 8% by weight, with respect to its total weight, of granules having a size smaller than 0.125 mm. and
wherein the percentage by weight of sepiolite granules which is mixed with the mineral raw material in step b) is in the range from 0.1 to 2% by weight, with respect to the total weight of the additive.

2. The process according to claim 1, wherein the mineral raw material is selected from the group consisting of calcium carbonate, calcium magnesium carbonate, bentonite, clinoptilolite, calcium phosphate, sodium phosphate, magnesium phosphate, attapulgite and cristobalite, preferably calcium magnesium carbonate.

3. The process according to claim 1 or claim 2, wherein the sepiolite granules have a moisture content of up to 11% and a bulk density of about 700 g/l.

4. The process according to any one of claims 1 to 3, wherein the at least one first coating agent of step c) is selected from the group consisting of E420 Sorbitol, E496 Peg 6000, E484 glyceryl polyethylene glycol ricinoleate, Maltodextrins, Polyethylene glycol 300, Polyethylene glycol 400, and polyvinylpyrrolidone, and mixtures thereof, preferably Polyethylene glycol 300.

5. The process according to any one of claims 1 to 4, wherein the oligoelement is contained in a salt or oxide selected from the group consisting of Cobalt, Selenium, Iodine, Zinc, Copper, Molybdenum, Chromium, Iron, Magnesium, Calcium, Aluminium, and Silicon.

6. The process according to any one of claims 1 to 5, wherein said at least one second coating agent of step e) is selected from the group consisting of E491 Sorbitan monostearate, E433 Polyoxyethylene sorbitan monooleate, E432 Polyoxyethylene sorbitan monolaurate, E434 Polyoxyethylene sorbitan monopalmitate, E435 Polyoxyethylene sorbitan monostearate, E433 Polyoxyethylene sorbitan monooleate, polyvinylpyrrolidone, and mixtures thereof, preferably E432 Polyoxyethylene sorbitan monolaurate (Polysorbate 20).

7. The process according to any one of claims 1 to 6, wherein the at least one first coating agent is Polyethylene glycol 300 and the at least one second coating agent of step e) is E432 Polyoxyethylene sorbitan monolaurate (Polysorbate 20).

8. The process according to any one of claims 1 to 7, wherein the process provides for a treatment step f) subsequent to step e) with a film-forming substance/solution.

9. An animal feed additive obtainable by the process according to any one of claims 1 to 8, and comprising a mineral raw material, sepiolite and at least one oligoelement, wherein said sepiolite comprises up to 5% by weight, with respect to its total weight, of granules having a size greater than 0.60 mm and up to 8% by weight, with respect to its total weight, of granules having a size smaller than 0.125 mm.

10. The additive according to claim 9, wherein the percentage of oligoelement adhering to the mineral matrix is in the range from 0.1 to 20% with respect to the amount of mineral raw material.

11. A use of sepiolite comprising up to 5% by weight, with respect to its total weight, of granules having a size greater than 0.60 mm and up to 8% by weight, with respect to its total weight, of granules having a size smaller than 0.125 mm to homogeneously distribute at least one oligoelement through an animal feed additive based on a mineral raw material and wherein the percentage by weight of sepiolite granules that is mixed with the mineral raw material is in the range from 0.1 to 2% by weight, with respect to the total weight of the additive.

## Patentansprüche

1. Verfahren zur Herstellung eines Tierfutterzusatzes, das die folgenden Schritte umfasst:
a) Bereitstellen von Körnern eines mineralischen Ausgangsstoffes;
b) Vermischen der Körner des mineralischen Ausgangsstoffes mit Sepiolith-Körnern, Erhalten eines Körnergemisches;
c) Versprühen des Körnergemisches mit mindestens einem ersten Beschichtungsmittel,
d) Zugeben einer Verbindung, die aus Salzen oder Oxiden mindestens eines Spurenelements ausgewählt ist, und Erhalten eines Körnergemisches, das mindestens ein Spurenelement umfasst, und
e) Versprühen des Körnergemisches, das mindestens ein Spurenelement umfasst, mit mindestens einem zweiten Beschichtungsmittel und Erhalten des Futterzusatzes,
wobei
das mindestens eine zweite Beschichtungsmittel von dem mindestens einen ersten Beschichtungsmittel verschieden ist, und
der Sepiolith bis zu 5 Gewichtsprozent, bezogen auf sein Gesamtgewicht, an Körnern mit einer Größe über 0,60 mm und bis zu 8 Gewichtsprozent, bezogen auf sein Gesamtgewicht, an Körnern mit einer Größe unter 0,125 mm umfasst, und
wobei der prozentuale Gewichtsanteil an Sepiolith-Körnern, der in Schritt b) mit dem mineralischen Ausgangsstoff vermischt wird, im Bereich von 0,1 bis 2 Gewichtsprozent liegt, bezogen auf das Gesamtgewicht des Zusatzes.

2. Verfahren nach Anspruch 1, wobei der mineralische Ausgangsstoff ausgewählt ist aus der Gruppe bestehend aus Calciumcarbonat, Calcium-Magnesium-Carbonat, Bentonit, Klinoptilolith, Calciumphosphat, Natriumphosphat, Magnesiumphosphat, Attapulgit und Cristobalit, bevorzugt Calcium-Magnesium-Carbonat.

3. Verfahren nach Anspruch 1 oder 2, wobei die Sepiolith-Körner einen Feuchtigkeitsgehalt von bis zu 11% und eine Schüttdichte von etwa 700 g/l aufweisen.

4. Verfahren nach einem der Ansprüche 1 bis 3, wobei das mindestens eine erste Beschichtungsmittel von Schritt c) ausgewählt ist aus der Gruppe bestehend aus E420 Sorbitol, E496 PEG 6000, E484 Glyceryl-Polyethylenglykol-Ricinoleat, Maltodextrinen, Polyethylenglykol 300, Polyethylenglykol 400 und Polyvinylpyrrolidon, und Gemischen derselben, bevorzugt Polyethylenglykol 300.

5. Verfahren nach einem der Ansprüche 1 bis 4, wobei das Spurenelement in einem Salz oder Oxid enthalten ist, welches ausgewählt ist aus der Gruppe bestehend aus Cobalt, Selen, Iod, Zink, Kupfer, Molybdän, Chrom, Eisen, Magnesium, Calcium, Aluminium und Silicium.

6. Verfahren nach einem der Ansprüche 1 bis 5, wobei das mindestens eine zweite Beschichtungsmittel von Schritt e) ausgewählt ist aus der Gruppe bestehend aus E491 Sorbitan-Monostearat, E433 Polyoxyethylen-Sorbitan-Monooleat, E432 Polyoxyethylen-Sorbitan-Monolaurat, E434 Polyoxyethylen-Sorbitan-Monopalmitat, E435 Polyoxyethylen-Sorbitan-Monostearat, E433 Polyoxyethylen-Sorbitan-Monooleat, Polyvinylpyrrolidon, und Gemischen derselben, bevorzugt E432 Polyoxyethylen-Sorbitan-Monolaurat (Polysorbat 20).

7. Verfahren nach einem der Ansprüche 1 bis 6, wobei das mindestens eine erste Beschichtungsmittel Polyethylenglykol 300 ist, und das mindestens eine zweite Beschichtungsmittel von Schritt e) E432 Polyoxyethylen-Sorbitan-Monolaurat (Polysorbat 20) ist.

8. Verfahren nach einem der Ansprüche 1 bis 7, wobei das Verfahren einen auf Schritt e) folgenden Behandlungsschritt f) mit einer filmbildenden Substanz/Lösung vorsieht.

9. Tierfutterzusatz, der durch das Verfahren nach einem der Ansprüche 1 bis 8 erhältlich ist und einen mineralischen Ausgangsstoff, Sepiolith und mindestens ein Spurenelement umfasst, wobei der Sepiolith bis zu 5 Gewichtsprozent, bezogen auf sein Gesamtgewicht, an Körnern mit einer Größe über 0,60 mm und bis zu 8 Gewichtsprozent, bezogen auf sein Gesamtgewicht, an Körnern mit einer Größe unter 0,125 mm umfasst.

10. Zusatz nach Anspruch 9, wobei der prozentuale Anteil an Spurenelement, das an der mineralischen Matrix haftet, im Bereich von 0,1 bis 20 Prozent liegt, bezogen auf die Menge an mineralischem Ausgangsstoff.

11. Verwendung von Sepiolith, der bis zu 5 Gewichtsprozent, bezogen auf sein Gesamtgewicht, an Körnern mit einer Größe über 0,60 mm und bis zu 8 Gewichtsprozent, bezogen auf sein Gesamtgewicht, an Körnern mit einer Größe unter 0,125 mm umfasst, um mindestens ein Spurenelement homogen in einem Tierfutterzusatz zu verteilen, der auf einem mineralischen Ausgangsstoff basiert, und wobei der prozentuale Gewichtsanteil an Sepiolith-Körnern, der mit dem mineralischen Ausgangsstoff vermischt wird, im Bereich von 0,1 bis 2 Gewichtsprozent liegt, bezogen auf das Gesamtgewicht des Zusatzes.

## Revendications

1. Procédé pour la préparation d'un additif alimentaire pour animaux comprenant les étapes suivantes :
a) la fourniture de granulés d'une matière première minérale ;
b) le mélange desdits granulés de la matière première minérale avec des granulés de sépiolite, en obtenant un mélange de granulés ;
c) la pulvérisation du mélange de granulés avec au moins un premier agent d'enrobage,
d) l'ajout d'un composé sélectionné parmi les sels ou les oxydes d'au moins un oligoélément et l'obtention d'un mélange de granulés comprenant au moins un oligoélément ; et
e) la pulvérisation du mélange de granulés comprenant au moins un oligoélément avec au moins un second agent d'enrobage et l'obtention de l'additif alimentaire,
dans lequel
ledit au moins un second agent d'enrobage est différent dudit au moins un premier agent d'enrobage, et
ladite sépiolite comprend jusqu'à 5 % en poids, par rapport à son poids total, de granulés ayant une taille supérieure à 0,60 mm et jusqu'à 8 % en poids, par rapport à son poids total, de granulés ayant une taille inférieure à 0,125 mm, et
dans lequel le pourcentage en poids de granulés de sépiolite qui est mélangé avec la matière première minérale à l'étape b) est dans la plage de 0,1 à 2 % en poids, par rapport au poids total de l'additif.

2. Procédé selon la revendication 1, dans lequel la matière première minérale est sélectionnée parmi le groupe constitué par le carbonate de calcium, le carbonate de calcium et de magnésium, la bentonite, la clinoptilolite, le phosphate de calcium, le phosphate de sodium, le phosphate de magnésium, l'attapulgite et la cristobalite, de préférence le carbonate de calcium et de magnésium.

3. Procédé selon la revendication 1 ou la revendication 2, dans lequel les granulés de sépiolite possèdent une teneur en humidité allant jusqu'à 11 % et une densité apparente d'environ 700 g/l.

4. Procédé selon l'une quelconque des revendications 1 à 3, dans lequel l'au moins un premier agent d'enrobage de l'étape c) est sélectionné parmi le groupe constitué par E420 le sorbitol, E496 le PEG 6000, E484 le ricinoléate de glycérol polyéthylène glycol, les maltodextrines, le polyéthylène glycol 300, le polyéthylène glycol 400, et la polyvinylpyrrolidone, et leurs mélanges, de préférence le polyéthylène glycol 300.

5. Procédé selon l'une quelconque des revendications 1 à 4, dans lequel l'oligoélément est contenu dans un sel ou un oxyde sélectionné parmi le groupe constitué par le cobalt, le sélénium, l'iode, le zinc, le cuivre, le molybdène, le chrome, le fer, le magnésium, le calcium, l'aluminium et le silicium.

6. Procédé selon l'une quelconque des revendications 1 à 5, dans lequel ledit au moins un second agent d'enrobage de l'étape e) est sélectionné parmi le groupe constitué par E491 le monostéarate de sorbitane, E433 le monooléate de sorbitane polyoxyéthylène, E432 le monolaurate de sorbitane polyoxyéthylène, E434 le monopalmitate de sorbitane polyoxyéthylène, E435 le monostéarate de sorbitane polyoxyéthylène, E433 le monooléate de sorbitane polyoxyéthylène, la polyvinylpyrrolidone, et leurs mélanges, de préférence E432 le monolaurate de sorbitane polyoxyéthylène (Polysorbate 20).

7. Procédé selon l'une quelconque des revendications 1 à 6, dans lequel l'au moins un premier agent d'enrobage est le polyéthylène glycol 300 et l'au moins un second agent d'enrobage au moins de l'étape e) est E432 le monolaurate de sorbitane polyoxyéthylène (Polysorbate 20).

8. Procédé selon l'une quelconque des revendications 1 à 7, dans lequel le procédé fournit une étape de traitement f) ultérieure à l'étape e) avec une substance/solution de formation de film.

9. Additif alimentaire pour animaux apte à être obtenu par le procédé selon l'une quelconque des revendications 1 à 8, et comprenant une matière première minérale, de la sépiolite et au moins un oligoélément, dans lequel ladite sépiolite comprend jusqu'à 5 % en poids, par rapport à son poids total, de granulés ayant une taille supérieure à 0,60 mm et jusqu'à 8 % en poids, par rapport à son poids total, de granulés ayant une taille inférieure à 0,125 mm.

10. Additif selon la revendication 9, dans lequel le pourcentage d'oligoélément adhérant à la matrice minérale est dans la plage de 0,1 à 20 % par rapport à la quantité de matière première minérale.

11. Utilisation de sépiolite comprenant jusqu'à 5 % en poids, par rapport à son poids total, de granulés ayant une taille supérieure à 0,60 mm et jusqu'à 8 % en poids, par rapport à son poids total, de granulés ayant une taille inférieure à 0,125 mm pour répartir de manière homogène au moins un oligoélément dans un additif alimentaire pour animaux basé sur une matière première minérale et dans laquelle le pourcentage en poids de granulés de sépiolite qui est mélangé avec la matière première minérale est dans la plage de 0,1 à 2 % en poids, par rapport au poids total de l'additif.
